# EUROPEAN PATENT APPLICATION

(11) **EP 2 000 184 A2**
(43) Date of publication of application: **10.12.2008**
(21) Application number: 07715224.7
(22) Date of filing: 06.03.2007
(51) Int. Cl.: A63F 13/00

(54) **GAME MACHINE, GAME MACHINE CONTROL METHOD, AND INFORMATION STORAGE MEDIUM**

(30) Priority: 27.03.2006 JP 2006086730
(71) Applicant: Konami Digital Entertainment Co., Ltd., Tokyo 107-8324 (JP)
(72) Inventor: MATSUMARU, Hajime, Minato-ku, Tokyo 1078324 (JP)
(74) Representative: Winter, Brandl, Fürniss, Hübner Röss, Kaiser, Polte Partnerschaft Patent- und Rechtsanwaltskanzlei
(86) International application number: PCT/JP2007/054256
(87) International publication number: WO 2007/111088

(57) **Abstract**

To provide a game machine for preferably producing a picture in which a first game character, in the case where a second game character moves so as to disappear from the view of the first game character, loses sight of the second game character and thus does not respond well to the second game character. An operation target control unit (76) causes a first game character to take an action according to an operation signal input from operation means, based on action control information in which an operation signal condition corresponds to each of a plurality of actions. A determination unit (72) determines whether or not a position of a second game character is included within a determination target area in the game space, the area being based on the position and orientation of the first game character. An action control information change unit (74) changes the action control information, based on a result of determination by the determination unit (72), and more specifically, the action control information change unit (74), for at least one of the plurality of actions, changes an operation signal condition corresponding to that action.

## Description

### TECHNICAL FIELD

The present invention relates to a game machine, a game machine control method, and an information storage medium.

### BACKGROUND ART

There is known a game machine for showing a picture of a game space where a first game character which acts according to a user's operation and a second game character are placed. For example, there is known a game machine showing a picture of a game space where eleven player characters belonging to a user's operation target team and eleven player characters belonging to an opponent team are placed, to thereby provide a soccer game to be played by the operation target team and the opponent team.
Patent Document 1: Japanese Patent Laid-open Publication No. 2003-210848

### DISCLOSURE OF THE INVENTION

### Problems to be Solved by the Invention

In an actual soccer match, a player A of an attack side team may move (action) in a way referred to as "pull away". That is, the player A may move so as to disappear from the view of a player B of the defense side team, who covers the player A. In other words, the player A may move to a position which cannot be captured, together with the ball at the same time, by the view of the player B. In this case, the player B loses sight of the player A, and thus, in a case such as the player A receiving the ball, may delay in taking an action to respond to (defend against) the player A. That is, the player B cannot respond well to the player A. As a result, the player A having received the ball can take a subsequent action free from being blocked by the player B. With a picture preferably produced in the above described game machine, in which, e.g., the player B who loses sight of the player A having moved as described above, and thus cannot well respond to (defend against) the player A, new excitement can be provided to the user.

The present invention has been conceived in view of the above, and an object of the present invention is to provide a game machine, a game machine control method and an information storage medium capable of showing a picture of a first game character who loses sight of a second game character having moved so as to disappear from the view of the first game character, and thus cannot respond well to (defend against) the second game character.

### Means for Solving the problems

In order to achieve the above described object, according to one aspect of the present invention, there is provided a game machine for showing a picture of a game space where a first game character which takes at least one of a plurality of actions according to an operation signal input from operation means and a second game character are placed, comprising: action control means for causing the first game character to take an action according to the operation signal input from the operation means, based on action control information in which an operation signal condition concerning the operation signal input from the operation means corresponds to each of the plurality of actions; determination means for determining whether or not a position of the second game character is included within a determination target area in the game space, the area being based on a position and orientation of the first game character; and action control information changing means for changing the action control information, based on a result of determination by the determination means, in which the operation signal condition corresponding to at least one of the plurality of actions is changed.

According to another aspect of the present invention, there is provided a control method for controlling a game machine for showing a picture of a game space where a first game character, which takes at least one of a plurality of actions according to an operation signal input from operation means, and a second game character are placed, comprising: an action control step of causing the first game character to take an action according to the operation signal input from the operation means, based on action control information in which an operation signal condition concerning the operation signal input from the operation means corresponds to each of the plurality of actions; a determination step of determining whether or not a position of the second game character is included within a determination target area in the game space, the area being based on a position and orientation of the first game character; and an action control information changing step of changing the action control information, based on a result of determination by the determination step, in which the operation signal condition corresponding to at least one of the plurality of actions is changed.

According to still another aspect of the present invention, there is provided a program for causing a computer, such as a personal computer, a consumer game machine, a portable game machine, a commercial game machine, a portable phone, a personal digital assistant (PDA), and so forth, to operate as a game machine for showing a picture of a game space where a first game character which takes at least one of a plurality of actions according to an operation signal input from operation means and a second game character are placed, comprising: action control means for causing the first game character to take an action according to the operation signal input from the operation means, based on action control information in which an operation signal condition concerning the operation signal input from the operation means corresponds to each of the plurality of actions; determination means for determining whether or not a position of the second game character is included within a determination target area in the game space, the area being based on a position and orientation of the first game character; and action control information changing means for changing the action control information, based on a result of determination by the determination means, in which the operation signal condition corresponding to at least one of the plurality of actions is changed.

According to yet another aspect of the present invention, there is provided an information storage medium recording the above described program. According to yet another aspect of the present invention, there is provided a program distribution device including an information storage medium recording the above described program, for reading the program from the information storage medium and distributing. According to yet another aspect of the present invention, there is provided a program distribution method for reading the above described program from an information storage medium recording the above described program, and distributing.

The present invention relates to a game machine for showing a picture of a game space where a first game character which takes at least one of a plurality of actions according to an operation signal input from operation means and a second game character are placed. According to the present invention, the first game character is caused to take an action according to an operation signal input from the operation means, based on action control information in which an operation signal condition concerning the operation signal input from the operation means corresponds to each of the plurality of actions. According to the present invention, whether or not a position of the second game character is included within a determination target area in the game space, the area based on a position and orientation of the first game character, is determined, and the action control information, or the base of the action control relative to the first game character, is changed based on the result of the determination. More specifically, according to the present invention, for one of the plurality of actions, an operation signal condition corresponding to the action is changed. Note that the "game space" includes a three dimensional game space formed using three coordinates elements and a two dimensional game space formed using two coordinates elements. According to the present invention, a picture in which a first game character, in the case where a second game character moves so as to disappear from the view of the first game character, loses sight of the second game character, and thus cannot respond well to the second game character can be preferably produced.

In one embodiment of the present invention, the action control information changing means may exchange an operation signal condition corresponding to a first action among the plurality of actions and an operation signal condition corresponding to a second action different from the first action among the plurality of actions.

In this embodiment, the first action may be a moving action of moving in a first directing of the game space, and the second action may be a moving action of moving in a second direction which is a direction opposite from the first direction in the game space.

In another embodiment of the present invention, the action control information changing means may change, for at least one of the plurality of actions, an operation signal condition corresponding to the action from a condition concerning a first operating member included in the operation means to a condition concerning a second operating member different from the first operating member included in the operation means.

### BRIEF DESCRIPTION OF THE DRAWINGS

Fig. 1 is a diagram showing a complete structure of a game machine according to an embodiment of the present invention;
Fig. 2 is a diagram showing one example of controller;
Fig. 3 is a diagram showing one example of a game space;
Fig. 4 is a diagram showing one example of action control tables A and B;
Fig. 5 is a diagram explaining first to eighth directions in the game space;
Fig. 6 is a diagram showing a goal front area;
Fig. 7 is a diagram showing a dead angle area:
Fig. 8 is a diagram showing one example of a state in which player objects are placed;
Fig. 9 is a diagram showing one example of a game screen image;
Fig. 10 is a diagram showing one example of a state in which player objects are placed;
Fig. 11 is a diagram showing one example of a game screen image;
Fig. 12 is a functional block diagram of a game machine;
Fig. 13 is a diagram showing one example of a player state table;
Fig. 14 is a flowchart of a process to be carried out in the game machine;
Fig. 15 is a diagram showing an entire structure of a program distribution system according to another embodiment of the present invention.

### BEST MODE FOR CARRYING OUT THE INVENTION

In the following, one example of an embodiment of the present invention will be described in detail with reference to the accompanying drawings. A game machine according to an embodiment of the present invention is realized using, e.g., a consumer game machine, a portable game machine, a portable phone, a personal digital assistant (PDA), a personal computer, and so forth. Here, a case in which a game machine according to an embodiment of the present invention is realized using a consumer game machine will be described.

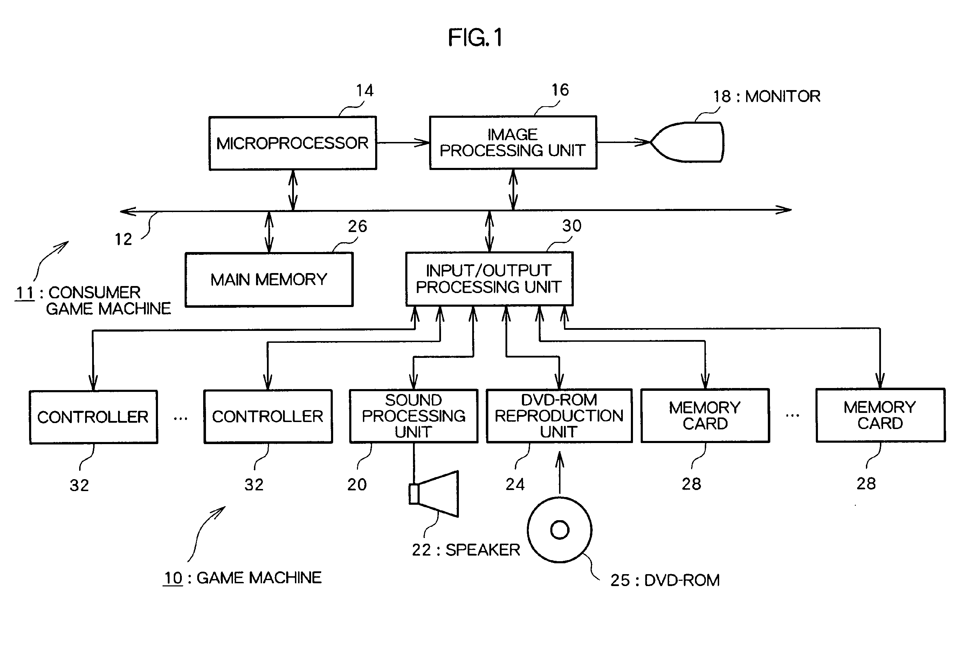

Fig. 1 is a diagram showing an entire structure of a game machine according to an embodiment of the present invention. The shown game machine 10 comprises a consumer game machine 11, a DVD-ROM 25, a memory card 28, a monitor 18, and a speaker 22. The DVD-ROM 25 and memory card 28 are information storage media. The DVD-ROM 25 and memory card 28 are mounted in the consumer game machine 11. The monitor 18 and speaker 22 are connected to the consumer game machine 11. For example, the monitor 18 may be a home-use television set receiver, and the speaker 22 may be a built-in speaker thereof.

The consumer game machine 11 is a publicly known computer game system comprising a bus 12, a microprocessor 14, an image processing unit 16, a sound processing unit 20, a DVD-ROM reproduction unit 24, a main memory 26, an input/output processing unit 30, and a controller 32. The respective structural elements other than the controller 32 are accommodated in an enclosure.

The bus 12 is used for exchanging an address and/or data among the respective units of the consumer game machine 11. The microprocessor 14, image processing unit 16, main memory 26, and input/output processing unit 30 are connected via the bus 12 for data exchange.

The microprocessor 14 controls the respective units of the consumer game machine 11, based on an operating system stored in a ROM (not shown), a program read from the DVD-ROM 25, and data read from the memory card 28. The main memory 26 comprises a RAM, for example, into which a program read from the DVD-ROM 25 and/or data read from the memory card 28 is written when required. The main memory 26 is also used as a working memory of the microprocessor 14.

The image processing unit 16, which comprises a VRAM, renders a game screen image into the VRAM, based on image data sent from the microprocessor 14, then converts the rendered game screen image into a video signal, and outputs the video signal to the monitor 18 at a predetermined time.

The input/output processing unit 30 is an interface via which the microprocessor 14 accesses the sound processing unit 20, DVD-ROM reproduction unit 24, memory card 28, and controller 32. The sound processing unit 20, DVD-ROM reproduction unit 24, memory card 28, and controller 32 are connected to the input/output processing unit 30.

The sound processing unit 20 comprises a sound buffer, in which various sound data, such as game music, game sound effects, message, and so forth, read from the DVD-ROM 25 is stored. The sound processing unit 20 reproduces the various sound data stored in the sound buffer and outputs via the speaker 22.

The DVD-ROM reproduction unit 24 reads a program from the DVD-ROM 25 according to an instruction from the microprocessor 14. It should be noted that although the DVD-ROM 25 is used here to provide a program to the consumer game machine 11, any other information storage medium, such as a CD-ROM, a ROM card, or the like, may be used instead. Alternatively, a program may be provided via a communication network, such as the Internet, or the like, from a remote place to the consumer game machine 11.

The memory card 28 comprises a nonvolatile memory (for example, EEPROM, or the like). The consumer game machine 11 has a plurality of memory card slots defined therein each for accepting a memory card 28, so that a plurality of memory cards 28 can be inserted into the consumer game machine 11 at the same time. The memory card 28 can be removed from the memory card slot, and stores various game data, such as saved data, or the like.

The controller 32 is a general purpose operation input means for inputting various game operations by a user. The input/output processing unit 30 scans the states of the respective units of the controller 32 in a constant cycle (e.g., every 1/60^{th} of a second) and sends an operation signal describing the scanning result to the microprocessor 14 via the bus 12. The microprocessor 14 determines the game operation by the user, based on the operation signal. The consumer game machine 11 is adapted to connection to a plurality of controllers 32 so that the microprocessor 14 controls a game, based on the operation signals input from the respective controllers 32.

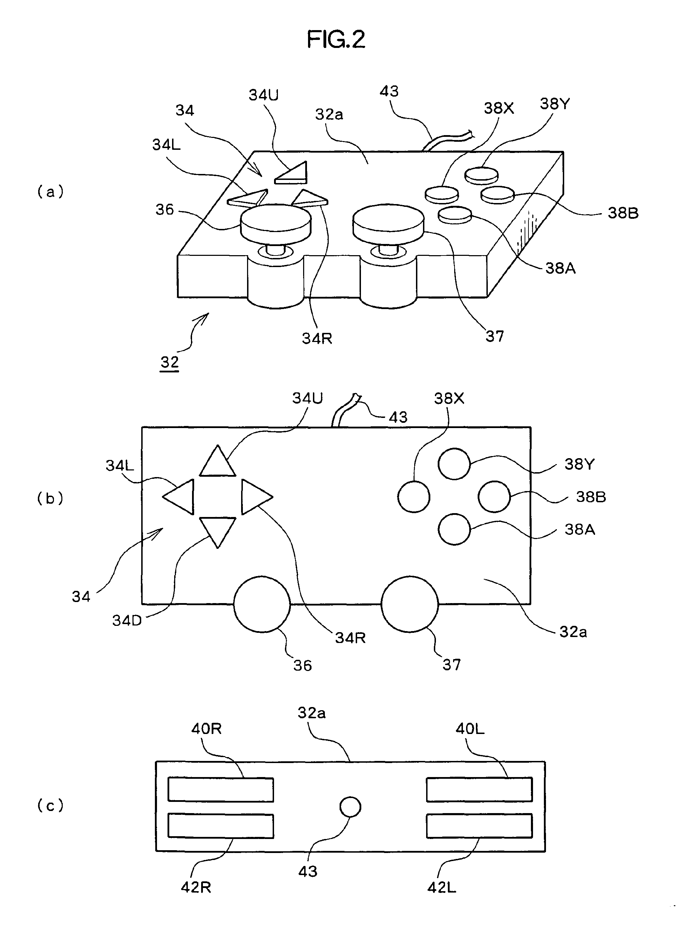

Fig. 2 is a diagram showing one example of the controller 32. Fig. 2(a) is a perspective view of the controller 32. Fig. 2(b) is a plan view of the controller 32. Fig. 2(c) is a rear elevation view of the controller 32. The controller 32 is connected via a controller cable 43 to the consumer game machine 11. Direction buttons 34 and a left operating stick 36 are formed on the left side of the front surface 32a of the controller 32. The direction buttons 34 include an upper direction button 34U, a lower direction button 34D, a left direction button 34L, and a right direction button 34R. Buttons 38X, 38Y, 38A, 38B, and a right operating stick 37 are formed on the right side of the front surface 32a of the controller 32. Further, buttons 40L, 40R are formed on the left and right sides, respectively, on the rear lateral surface of the controller 32 closer to the front surface 32a thereof, and the buttons 42L, 42R are similarly formed but closer to the bottom surface thereof.

The direction buttons 34 are generally used to designate a direction in which to move a game character. The buttons 38X, 38Y, 38A, 38B, 40L, 40R, 42L, 42R are used to carry out various game operations. The left operating stick 36 and right operating stick 37 are stick-like operating members standing on the enclosure surface of the controller 32. The left operating stick 36 and right operating stick 37 are free to be inclined from the upstanding position in all directions by a predetermined angle. The left operating stick 36 and right operating stick 37 are also used to designate a direction in which to move a game character.

In the above described game device 10, with execution of a game program read from, e.g., the DVD-ROM 25, a soccer match game between a user's operation target team and an opponent team is realized.

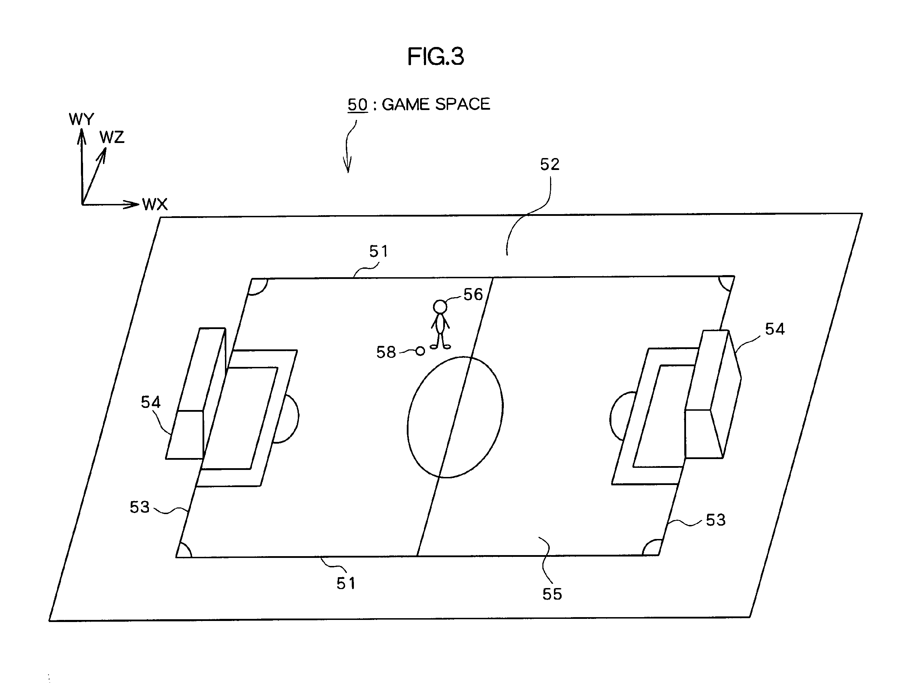

A game space (a virtual three-dimensional space) is created in the main memory 26 of the game machine 10. Fig. 3 is a diagram showing one example of the game space. As shown, a field object 52 representing a soccer pitch and goal objects 54 representing goals are placed in the game space 50, constituting a soccer game field. The field object 52 is placed parallel to the WX-WZ plane. A player object 56 representing a soccer player and a ball object 58 representing a soccer ball are placed on the field object 52. Note that although only one player object 56 is shown in Fig. 3, eleven player objects 56 belonging to the user's operation target team and eleven player objects 56 belonging to the opponent team are actually placed.

One of the two goal objects 54 is associated with the operation target team, and the other with the opponent team. The ball object 58 having moved into the goal object associated with one of the teams makes a score event for the other team.

Any of the player objects 56 belonging to the operation target team serves as a user's operation target. The user's operation target is switched among the player objects 56 of the user's operation target team according to movement of the ball object 58 and/or the user's switching operation.

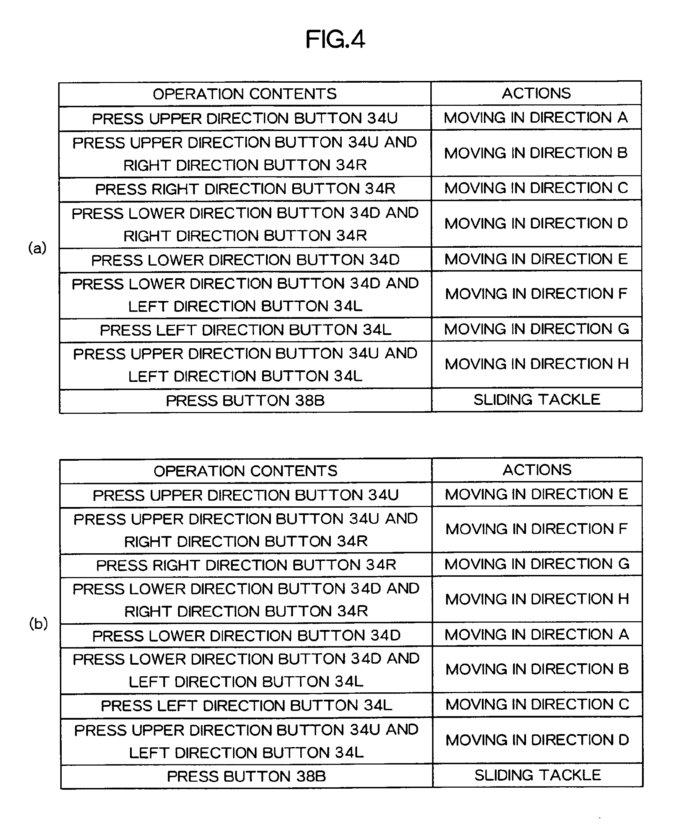

The user's operation target player object 56 takes various actions according to the contents of an operation carried out by the user (contents of an operation carried out relative to the controller 32). Action control for the user's operation target player object 56 is carried out based on an action control table read from the DVD-ROM 25. The action control table shows correspondence between the contents of a user's operation and the contents of an action taken by the player object 56 (see Fig. 4).

Player objects 56 other than the user's operation target player object 56 act according to an operation by a computer. Player objects 56 other than the user's operation target player object 56 include player objects 56 of the operation target team other than the user' s operation target player object 56 and player objects 56 of the opponent team. Any of the four position kinds, namely, "forward (FW)", "midfielder (MF)", "defender (DF)", and "goal keeper (GK)" are assigned to the respective player objects 56. The player objects 56 other than the user's operation target player object 56 act according to the position kinds assigned thereto.

With the distance between the player object 56 and the ball object 58 becoming smaller than a predetermined distance (a ball holding determination reference distance), the player object 56 is made associated with the ball object 58 under a predetermined condition, and the ball object 58 in the state thereafter moves according to the movement of the player object 56. This is expressed as the player object 56 being engaged in a dribble action. When the operation target player object 56 is associated with the ball object 58, the user, by operating the controller 32, can cause the operation target player object 56 to kick the ball object 58. That is, the user can cause the operation target player object 56 to make a pass action, a shoot action, and so forth. When the operation target player object 56 is not associated with the ball object 58, on the other hand, the user, by operating the controller 32, can cause the operation target player object 56 to carry out a shoulder tackle action, a sliding tackle action, and so forth. It should be noted that a state in which the player object 56 is associated with the ball object 58 is hereinafter referred to as "a state with the player object 56 holding the ball object 58".

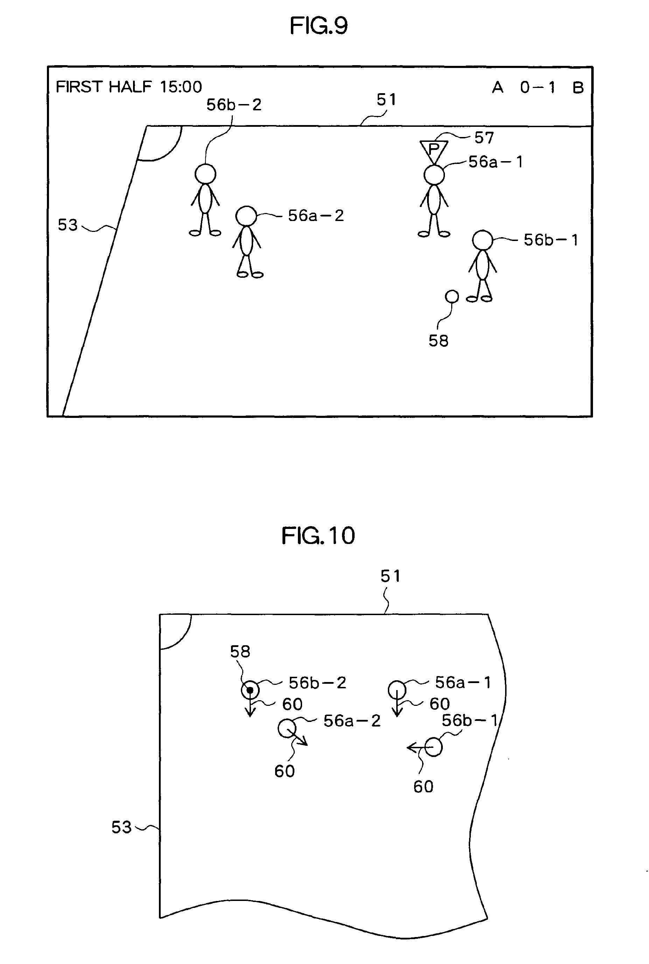

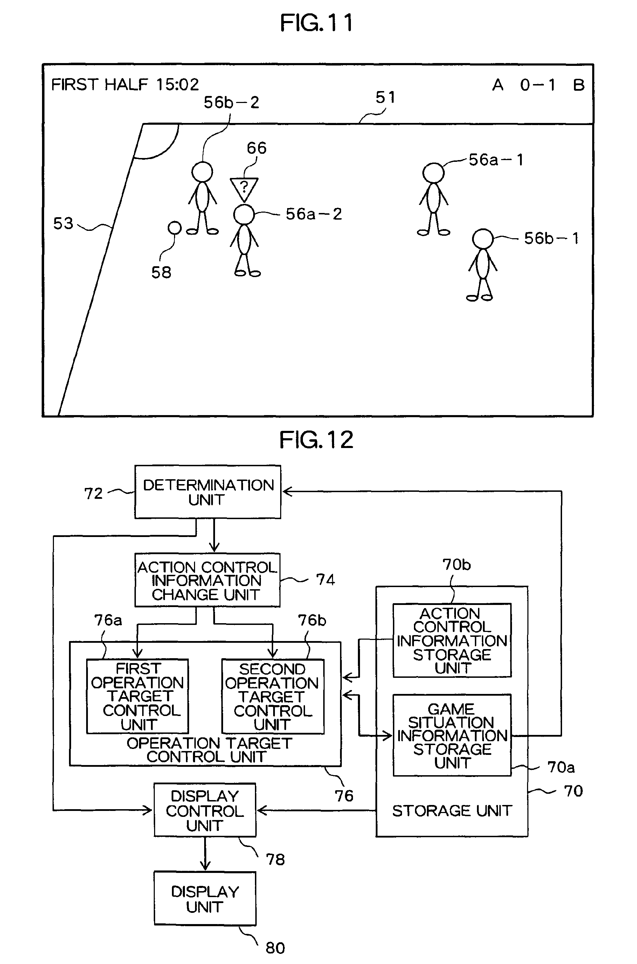

In the game space 50, a virtual camera which moves according to the movement of, e.g., the ball object 58 is set. A game screen image showing a picture of the game space 50 viewed from the virtual camera is shown on the monitor 18. That is, a picture of an area in the game space 50, specified based on the position (a viewpoint position) and orientation (a viewing direction) of the virtual camera is shown on the game screen (see Figs. 9 and Fig. 11).

In the following, a technique for preferably producing a picture in which, in the case where a forward player object 56 of the opponent team moves and disappears from the view of a defender player object 56 of the user's operation target team, the defender player object 56 loses sight of the forward player object 56, and resultantly cannot respond well to (defend against or the like) the forward player object 56, is described.

For the above described production, when the operation target team is on the defense side, an action control table for use in action control relative to the operation target player object 56 is changed under a predetermined condition in the game machine 10. In other words, in the game machine 10, when the operation target team is on the defense side, for at least one action taken by the player object 56, an operation corresponding to the action is changed under a predetermined condition. Note that a state in which the operation target team is on the defense side refers to a state in which any player object 56 of the opponent team holds the ball object 58.

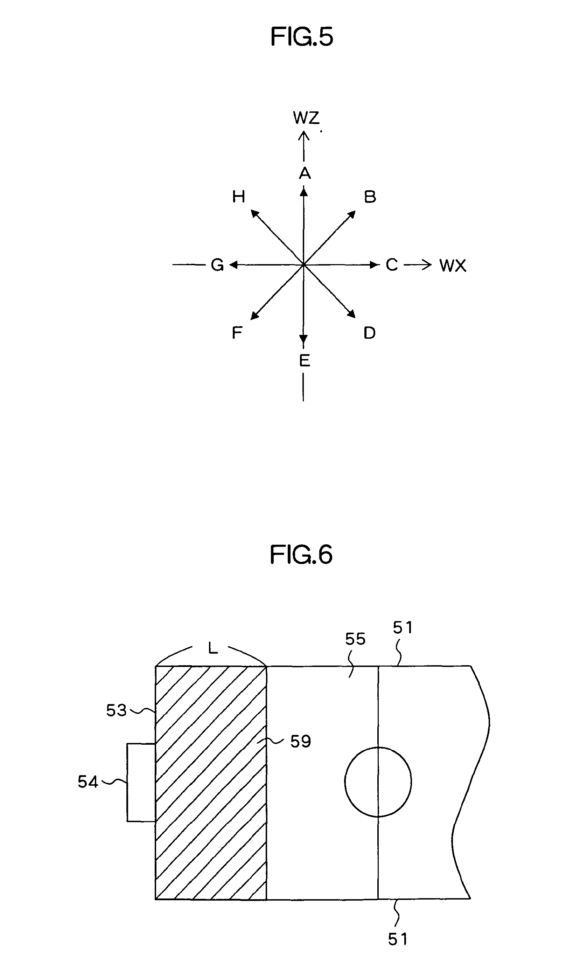

In the game machine 10, two kinds of action control tables are available as action control tables for use in the case where the operation target team is on the defense side. Fig. 4 shows examples of action control tables for use in the case where the operation target team is on the defense side. Here, as shown in Fig. 5, the "direction A" in Fig. 4 refers to the WZ axial positive direction in the game space 50, and the "direction B" refers to the direction rotated from the WZ axial positive direction in the game space 50 by 45 degrees in the WX axial positive direction (or clockwise). The "direction C" refers to the WX axial positive direction in the game space 50. The "direction D" refers to the direction rotated from the WX axial positive direction in the game space 50 by 45 degrees in the WZ axial negative direction (or clockwise). The "direction E" refers to the WZ axial negative direction in the game space 50. The "direction F" refers to the direction rotated from the WZ axial negative direction in the game space 50 by 45 degrees in the WX axial negative direction (or clockwise). The "direction G" refers to the WX axial negative direction in the game space 50. The "direction H" refers to the direction rotated from the WX axial negative direction in the game space 50 by 45 degrees in the WZ axial positive direction (or clockwise).

Referring to the action control table shown in Fig. 4(a) (hereinafter referred to as an action control table A) and the action control table shown in Fig. 4(b) (hereinafter referred to as an action control table B), as for some actions, contents of operations corresponding to the action are different between the tables. In detail, contents of an operation corresponding to "a moving action in the direction A" are exchanged with those corresponding to "a moving action in the direction E (a direction opposite from the direction A)". Further, contents of an operation corresponding to "a moving action in the direction B" are exchanged with those corresponding to "a moving action in the direction F (a direction opposite from the direction B)". Still further, contents of an operation corresponding to "a moving action in the direction C" are exchanged with those corresponding to "a moving action in the direction G (a direction opposite from the direction C)". Yet further, contents of an operation corresponding to "a moving action in the direction D" are exchanged with those corresponding to "a moving action in the direction H (a direction opposite from the direction D)". That is, according to the action control table B, moving directions of the player object 56 in response to an operation carried out by the controller 32 (direction buttons 34) are opposite from those according to the action control table A.

Note that the action control tables A and B are information describing correspondence between an operation signal input from the controller 32 (in other words, an operation signal condition concerning an operation signal input from the controller 32) and an action to be taken by a player object 56. For example, the action control table A describes that in response to the user's pressing the upper direction button 34U, the user' s operation target player object 56 moves in the direction A in the game space 50. This means that the user's operation target player object 56 takes a moving action in the direction A in the game space 50 in response to an operation signal indicating that the upper direction button U34 is pressed, input from the controller 32.

In the case where the operation target team is on the defense side, on principle, action control relative to the user' s operation target player object 56 is carried out based on the action control table A. Meanwhile, in the case where the user's operation target player object 56 (a first game character) satisfies the conditions 1 to 3 described below, action control relative to the user's operation target player object 56 is carried out based on the action control table B.
[Condition 1] The position kind is a defender.
[Condition 2] The position is within an area in front of the goal (goal front area) of the operation target team.
[Condition 3] A forward player object 56 (second game character) of the opponent team is present within a dead angle area.

Fig. 6 is a diagram explaining a goal front area. As shown, the goal front area 59 of the operation target team is an area within the pitch 55 and within a predetermined distance L from the goal line 53 on the goal object 54 side of the operation target team. Note that the pitch 55 is an area enclosed by the touch lines 51 and goal lines 53.

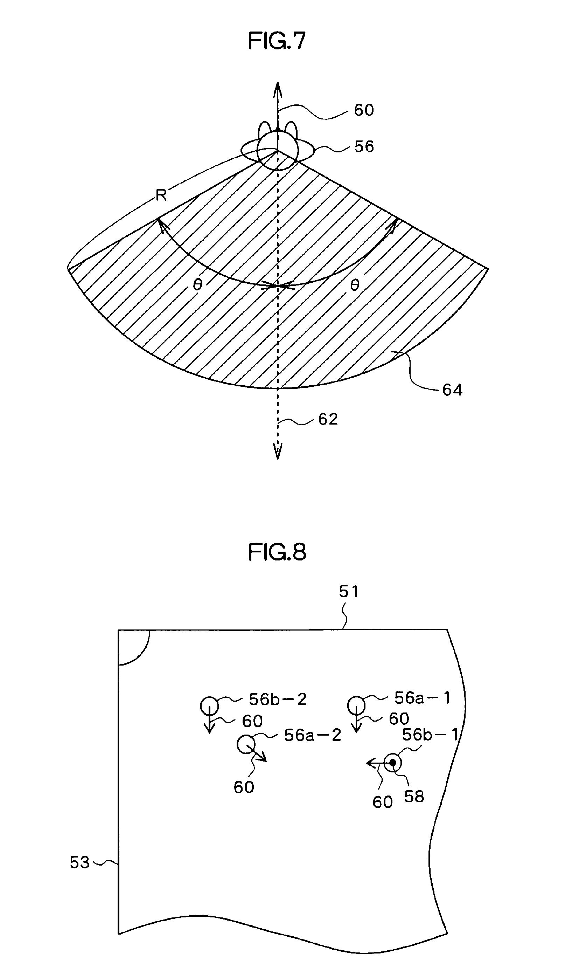

Fig. 7 is a diagram explaining a dead angle area (determination target area). As shown, the dead angle area 64 of a player object 56 is a fan-like area with the angle formed by the rear direction 62 (the direction opposite from the reference direction 60) of the player object 56 and a direction extending from the player object 56, being equal to or smaller than a predetermined reference angle (θ), and the distance (the distance on the XZ plane system) from the player object 56 being equal to or shorter than a predetermined reference distance (R). Note that the reference direction 60 of the player object 56 may be the direction in which the body of the player object 56 is directed or the head thereof is directed (or the viewing direction of the player object 56). As described above, the dead angle area 64 is an area defined based on the position of the player object 56, and moves according to the movement of the player object 56.

Fig. 8 shows one example of a state where the player objects 56 and ball object 58 are placed (positions and reference directions 60), in which the player object 56b-1 holds the ball object 58. The player objects 56a-1, 56a-2 are player objects 56 belonging to the operation target team, and the player object 56a-1 is the user's operation target. The position kind of the player object 56a-1 is a midfielder, and that of the player object 56a-2 is a defender. The player object 56a-2 is located within the area 59 (a goal front area) in front of the goal of the operation target team. The player objects 56b-1, 56b-2 are player objects 56 belonging to the opponent team. The position kind of the player object 56b-1 is a midfielder, and that of the player object 56b-2 is a forward. The player object 56b-2 is located in the dead angle area 64 of the player object 56a-2. That is, the player object 56a-1 does not satisfy the above described conditions 1 to 3, while the player object 56a-2 satisfies the above described conditions 1 to 3.

Fig. 9 shows one example of a game screen image to be shown with respect to the state shown in Fig. 8, or one example of a game screen image to be shown when the user's operation target player object 56 (player object 56a-1) does not satisfy at least one of the above described conditions 1 to 3. In this case, in response to the user's operating the controller 32, the player object 56a-1 takes an action according to the action control table A. For example, in response to the user' s pressing the upper direction button 34U, a picture in which the player object 56a-1 moves in the direction A (the WZ axial positive direction) in the game space 50 is shown on the game screen.

On this game screen, an operation target player indicator mark 57 is shown above the player object 56a-1 (the user's operation target player object 56). By referring to the operation target player indicator mark 57, the user can instantly know that the player object 56a-1 is the operation target.

Fig. 10 shows a state established after the player object 56b-1 in the state shown in Fig. 8 passes the ball object 58 to the player object 56b-2. In this case, the user's operation target is switched to the player object 56a-2, which has the shortest distance to the ball object 58 among the player objects 56 of the operation target team.

Fig. 11 shows one example of a game screen image to be shown with respect to the state shown in Fig. 10, or one example of a game screen image to be shown when the user' s operation target player object 56 (the player object 56a-2) satisfies the above described conditions 1 to 3. In this case, in response to the user' s operating the controller 32, the player object 56a-2 takes an action according to the action control table B. For example, in response to the user' s pressing the upper direction button 34U, a picture in which the player object 56a-2 moves in the direction E (the WZ axial negative direction) in the game space 50 is shown on the game screen. In this case, as the player object 56a-2 moves in the direction opposite from the direction in which the player object 56a-2 would normally move in response to an operation carried out using the direction buttons 34, the user is required to operate in order to cause the player object 56a-2 to move in their desired direction, while considering that the player object 56a-2 will move in the direction opposite from the direction normally corresponding to the operation by the controller 32 (direction buttons 34). For example, in order to cause the player object 56a-2 to move in the direction H in the game space 50, the user is required to carry out an operation which would normally cause the player object 56a-2 to move in the direction D (the direction opposite from the direction H), that is, to press the lower direction button 34D and right direction button 34R. As a result, the user cannot readily respond to (defend against) the player object 56b-2 by operating the player object 56a-2.

Also, in this game screen image, a restricted player indicator mark 66, instead of the operation target player indicator mark 57, is shown above the player object 56a-2 (the user's operation target player object 56). By referring to the restricted player indicator mark 66, the user can instantly know that the player object 56a-2 is the operation target and also has been subjected to movement in a direction opposite from the direction in which the player object 56a-2 would normally move in response to an operation of the direction buttons 34. Note that instead of showing the restricted player indicator mark 66, the player object 56a-2 may be shown in a manner different from normal, such as by blinking or in a predetermined color.

In the above described manner, a picture in which the player object 56a-2 loses sight of the player object 56b-2 having moved so as to disappear from the view of the player object 56a-2, and thus cannot well respond to (defend against) the player object 56b-2 is preferably produced.

In the following, a function realized in the game machine 10 will be described. Fig. 12 is a functional block diagram mainly showing a function according to the present invention, among those realized in the game machine 10. As shown, the game machine 10 comprises, in terms of functions, a storage unit 70, a determination unit 72, an action control information change unit 74, an operation target control unit 76, a display control unit 78, and a display unit 80. These functions are realized by the game machine 10 by carrying out a game program read from the DVD-ROM 25.

### [1. Storage Unit]

The storage unit 70 is realized mainly using the main memory 26 and/or DVD-ROM 25. The storage unit 70 stores data indicating the shapes of various objects, such as, e.g., the player object 56, ball object 58, and so forth (data specifying the coordinates of the respective vertexes of the polygons forming various objects). In addition, for example, motion data describing change in the posture of a player object 56 taking various actions is stored. Further, for example, an ability parameter (a pass ability parameter or the like) of each player object 56 placed in the game space 50 is stored. Each ability parameter is expressed by any numeric value between 0 and 100, with an ability parameter with a higher numeric value indicating higher ability.

The storage unit 70 includes a game situation information storage unit 70a. The game situation information storage unit 70a stores game situation information describing the situation of a game. Game situation information includes, for example, information describing the states of the respective player objects 56, ball object 58, and virtual camera placed in the game space 50. "Information describing the state of a player object 56" includes information describing position, posture, movement direction, and moving speed of each player object 56 in the game space 50, information describing the position kind of the player object 56, information describing whether or not the player object 56 holds the ball object 58, and information describing whether or not the player object 56 is the user's operation target. "Information describing the state of the ball object 58" includes information describing the position, movement direction, and moving speed of the ball object 58 in the game space 50. "Information describing the state of the virtual camera" includes, e.g., information describing the position (a viewpoint position), posture (a viewing direction), and an angle of view, and so forth, of the virtual camera in the game space 50. Game situation information includes, e.g., information describing situations of the match, such as scores of the respective teams, a period of time elapsed after the match begins, and so forth.

It should be noted that information describing the state of the user's operation target player object 56 is updated by the operation target control unit 76 to be described later. The information describing the state of the ball object 58 is updated based on an operation signal input from the controller 32 when, for example, a dribble instruction operation, a pass instruction operation, a shoot instruction operation, and so forth is carried out while the user's operation target player object 56 holds the ball object 58. Also, the information describing the states of player objects 56 other than the user's operation target player object 56 is updated according to a predetermined algorithm. The information describing the state of the ball object 58 is also updated when a player object 56 other than the user's operation target player object 56 carries out a dribble action, a pass action, a shoot action, and so forth.

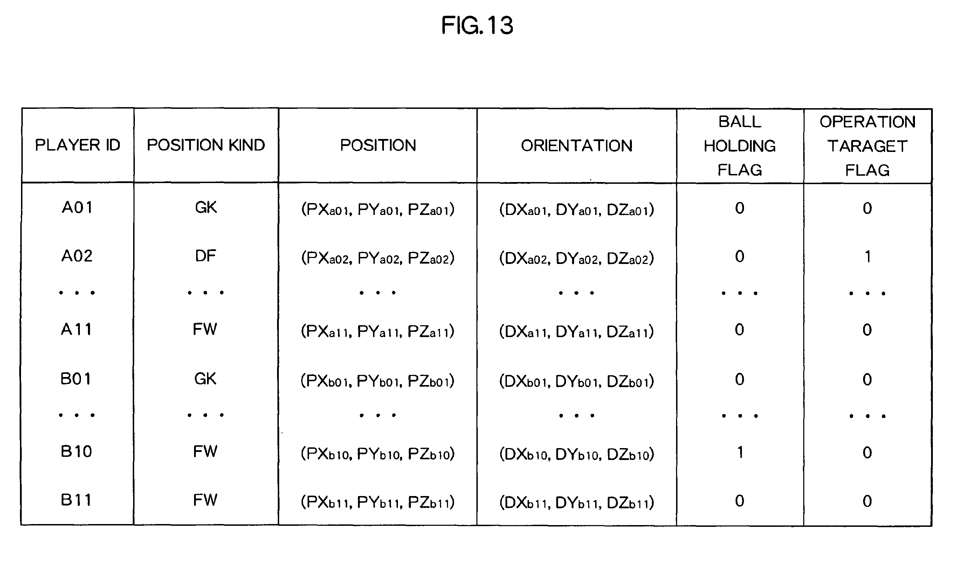

In this embodiment, the game situation information storage unit 70a stores a player state table which shows the states of the player objects 56 of the respective teams. Fig. 13 shows a part of the player state table. The shown player state table includes "player ID", "position kind ", "position", "orientation ", "ball holding flag", "operation target flag" fields. In the "player ID" field, a player ID for uniquely identifying each player object 56 placed in the game space 50 is stored. Note that the player object 56 having a player ID beginning with "A" belongs to the operation target team (team A) and the player object 56 having a player ID beginning with "B" belongs to the operation target team (team B). In the "position kind" field, the position kind of the player object 56 is stored. In the "position" field, the position coordinates of a representative point (e.g., a central point) of the player object 56 in the game space 50 are stored. In the "orientation" field, a unit vector indicating the reference direction 60 (e.g., a front direction or viewing direction) of the player object 56 is stored. In the "ball holding flag" field, information indicating whether or not the player object 56 holds the ball object 58 is stored. When the player object 56 does not hold the ball obj ect 58, the "ball holding flag" field is set to 0, and when the player object 56 holds the ball object 58, the "ball holding flag" field is set to 1. In the "operation target flag" field, information indicating whether or not the player object 56 is the user's operation target is stored. When the player object 56 is not the user's operation target, the "operation target flag" field is set to 0, and when the player object 56 is the user's operation target, the "operation target flag" field is set to 1.

The storage unit 70 includes an action control information storage unit 70b. The action control information storage unit 70b stores action control information in which an operation signal condition concerning an operation signal input from the controller 32 is made to correspond to an action of the player object 56. Note that the action control information may be held in the form of a table or a part of a program. In this embodiment, the action control information storage unit 70b stores the action control table A (first action control information) and action control table B (second action control information) (Fig. 4).

### [2. Determination Unit]

The determination unit 72 is realized mainly using the microprocessor 14 and main memory 26. The determination unit 72 determines whether or not the user' s operation target player object 56 satisfies the above described conditions 1 to 3.

### [3. Action Control Information Change Unit]

The action control information change unit 74 is realized mainly using the microprocessor 14 and main memory 26. The action control information change unit 74 changes action control information, or a base for action control for the user' s operation target player object 56 by the operation target control unit 76, based on the result of determination by the determination unit 72. More particularly, for at least one of the plurality of actions, the action control information change unit 74 changes the contents of an operation (an operation signal condition) corresponding to that action.

In this embodiment, the action control information change unit 74 causes either the first operation target control unit 76a or second operation target control unit 76b to carry out action control for the user's operation target player object 56. The action control information change unit 74 switches between a state in which the first operation target control unit 76a carries out action control for the user's operation target player object 56 and a state in which the second operation target control unit 76b carries out the action control, based on a result of determination by the determination unit 72. In the case where the user' s operation target player object 56 does not satisfy any of the above described conditions 1 to 3, the action control information change unit 74 in this embodiment causes the first operation target control unit 76a to carry out action control for the player object 56, and in the case where the user's operation target player object 56 satisfies all of the above described conditions 1 to 3, the action control information change unit 74 causes the second operation target control unit 76b to carry out action control for the player object 56.

### [4. Operation Target Control Unit]

The operation target control unit 76 (action control means) is realized mainly using the microprocessor 14. The operation target control unit 76 causes the user's operation target player object 56 to take an action in accordance with an operation signal input from the controller 32, based on the action control information stored in the action control information storage unit 70b.

In this embodiment, the operation target control unit 76 includes a first operation target control unit 76a and a second operation target control unit 76b. The first operation target control unit 76a and second operation target control unit 76b update the information describing the state of the user's operation target player object 56 according to the contents of the user's operation (that is, an operation signal input from the controller 32). The first operation target control unit 76a carries out the above described update process, based on the action control table A, while the second operation target control unit 76b carries out the above described update process, based on the action control table B.

### [5. Display Control Unit and Display Unit]

The display control unit 78 is realized mainly using the microprocessor 14 and image processing unit 16, and the display unit 80 is realized mainly using the monitor 18. The display control unit 78 produces a game screen image showing a picture obtained by viewing, from the virtual camera, the "game space 50 where the respective player objects 56 and ball object 58 are placed based on the game situation information stored in the game situation information storage unit 70a", and shows the produced game screen image on the display unit 80.

In this embodiment, the display control unit 78 shows an operation target player indicator mark 57 at a position based on the position where the user's operation target player object 56 (a predetermined position above the head in this embodiment) is shown on the game screen. It should be noted that the display control unit 78 performs control to show the restricted player indicator mark 66, instead of the operation target player indicator mark 57, in the case where the operation target team is on the defense side and the user's operation target player object 56 satisfies the above described conditions 1 to 3.

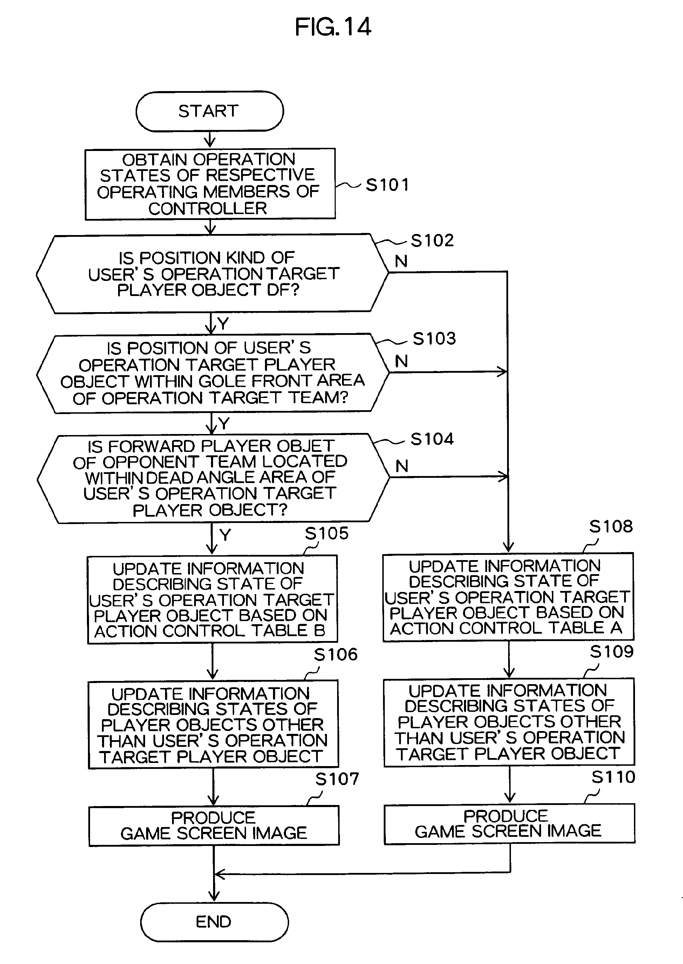

In the following, a process to be carried out in the game machine 10 will be described. Fig. 14 is a flowchart mainly concerning a process according to the present invention among those carried out by the game machine 10 every predetermined period of time (e.g., 1/60^{th} of a second) in the case where the operation target team is on the defense side. A game program for causing the microprocessor 14 to carry out this process is read from the DVD-ROM 25 in the game machine 10, and carried out by the microprocessor 14, whereby the above described respective functional blocks (Fig. 12) are realized.

As shown in Fig. 14, initially, the states of operation of the respective operating members of the controller 32 are obtained, based on an operation signal input from the controller 32 (S101).

Thereafter, whether or not the position kind of the user's operation target player object 56 is a defender is determined (S102) . That is, whether or not the user's operation target player object 56 satisfies the above described condition 1 is determined. This determination is made based on the player state table (Fig. 13).

In the case where it is determined that the position kind of the user's operation target player object 56 is a defender, whether or not the position of the player object 56 is included in the goal front area 59 of the operation target team is determined (S103). That is, whether or not the user's operation target player object 56 satisfies the above described condition 2 is determined. This determination is also made based on the player state table (Fig. 13).

In the case where it is determined that the position of the user's operation target player object 56 is included in the goal front area 59 of the operation target team, whether or not a "player object 56 of the opponent team, for which position kind is a forward" is located within the dead angle area 64 of the user's operation target player object 56 is determined (S104). That is, whether or not the user's operation target player object 56 satisfies the above described condition 3 is determined.

More specifically, the following process is carried out relative to the respective player objects 56 for which position kinds are forward among the player objects 56 of the opponent team. That is, whether or not the angle formed by the "rear direction 62 of the user's operation target player object 56" and the "direction extending from the user' s operation target player object 56 to the forward player object 56 of the opponent team" is equal to or smaller than a predetermined reference angle (θ) is determined. This determination is made based on the player state table (Fig. 13). Further, whether or not the distance between the user's operation target player object 56 and the forward player object 56 of the opponent team is equal to or smaller than a predetermined reference distance (R) is determined. This determination is also made based on the player state table (Fig. 13). In the case where it is determined that the angle is equal to or smaller than the reference angle (θ) and the distance is equal to or smaller than the reference distance (R), it is concluded that a "player object 56 of the opponent team, for which position kind is a forward" is located within the dead angle area 64 of the user' s operation target player object 56.

In the case where a "player object 56 of the opponent team, for which position kind is a forward" is located within the dead angle area 64 of the user's operation target player object 56, information (the player state table (Fig. 13) or the like) describing the state of the user's operation target player object 56 is updated, based on the states of operation of the respective operating members, obtained at S101, and the action control table B (S105). That is, an action corresponding to the state of operation of the respective operating members, obtained at S101, is specified, based on the action control table B, and information describing the state of the user's operation target player object 56 is updated such that the user's operation target player object 56 takes that action.

After the process at S105, information (the player state table (Fig. 13) or the like) describing the states of the player objects 56 other than the user' s operation target player object 56 is updated, based on the position kinds thereof, according to a predetermined algorithm (S106). Note that in the process at S106, in the case where a dribble action, a pass action, a shoot action, and so forth is taken by the player object 56 of the opponent team, the information describing the state of the ball object 58 is updated. In the case where a player object 56 holding the ball object 58 is changed to another player object 56, the ball holding flag (Fig. 13) is updated. In the case where, for example, the user carries out a switching operation relating to an operation target (pressing the button 40L in this embodiment), the operation target flag (Fig. 13) is updated.

After the process at S106, a game screen image is produced (S107). For example, an image showing a picture obtained by viewing, from the virtual camera, the "game space 50 where the respective player objects 56 and ball object 58 are placed, based on the game situation information stored in the game situation information storage unit 70a", is rendered into the VRAM. Thereafter, the restricted player indicator mark 66 is overwritten onto a predetermined position above the user's operation target player object 56 in the image rendered in the VRAM. Further, a score image and an elapsed time image are overwritten onto the image rendered in the VRAM. As described above, a game screen image (Fig. 11) is formed in the VRAM. The game screen image formed in the VRAM is displayed on the display unit 80 for output at a predetermined time.

Meanwhile, in the case where it is determined at S102 that the position kind of the user's operation target player object 56 is not a defender (S102: N), in the case where it is determined at S103 that the position of the user's operation target player object 56 is not included in the goal front area 59 of the operation target team (S103: N), or in the case where it is determined at S104 that a "player object 56 of the opponent team, for which position kind is a forward" is not located within the dead angle area 64 of the player object 56 (S104: N), the information (the player state table (Fig. 13) or the like) describing the state of the user's operation target player object 56 is updated, based on the states of operation of the respective operating members, obtained at S101, and the action control table A (S108). That is, an action corresponding to the states of operation of the respective operating members, obtained at S101, is specified according to the action control table A, and the information describing the state of the user's operation target player object 56 is updated such that the user' s operation target player object 56 takes that action.

After the process at S108, information (the player state table (Fig. 13) or the like) describing the states of the player objects 56 other than the user' s operation target player object 56 is updated, based on the position kinds thereof, according to a predetermined algorithm (S109). This process is carried out similar to the process at S106.

After the process at S109, a game screen image is produced (S110). For example, an image showing a picture obtained by viewing, from the virtual camera, "the game space 50 where the respective player objects 56 and ball object 58 are placed, based on the contents of the player state table (Fig. 13)" is rendered into the VRAM. Thereafter, the operation target player indicator mark 57 is overwritten onto a predetermined position above the user's operation target player object 56 in the image rendered in the VRAM, and a score image and an elapsed time image are overwritten onto the image rendered in the VRAM. With the above, a game screen image (Fig. 9) is formed in the VRAM. The game screen image formed in the VRAM is displayed on the display unit 80 for output at a predetermined time.

In the above described game machine 10, a relationship between the contents of an operation carried out by the controller 32 and an action to be taken by the user's operation target player object 56 is changed between a case where the user' s operation target player object 56 satisfies all of the above described conditions 1 to 3 and a case where the user's operation target player object 56 does not satisfy at least one of the above described conditions 1 to 3. More specifically, a movement direction corresponding to an operation carried out by the controller 32 (the direction buttons 34) in the case where the user's operation target player object 56 satisfies all of the above described conditions 1 to 3 is thus opposite from that in the case where the user's operation target player object 56 does not satisfy at least one of the above described conditions 1 to 3. This makes it more difficult for the user to operate the operation target player object 56. As a result, an image of a picture in which a defender player object 56 of the operation target team loses sight of a forward player object 56 of the opponent team having moved so as to disappear from the view of the defender player object 56, and thus cannot respond well to (defend against) the forward player object 56 is preferably produced.

In addition, in this embodiment, once the user has become accustomed to an operation required in the case where a moving direction corresponding to an operation carried out by the controller 32 (the direction buttons 34) becomes opposite from that in a normal case (that is, an operation in accordance with the action control table B), the user can respond well to the forward player object 56 of the opponent team having moved so as to disappear from the view of the user's operation target player object 56. That is, the user is encouraged to improve their training level in operating the game.

Here, it should be noted that that the present invention is not limited to the above-described embodiment.

For example, the action control table B may define, as an operation to cause a player object 56 to move in the respective directions (directions A to H), an operation of an operating member (e.g. , tilting the left operating stick 36) other than the direction buttons 34. With the above, in the case where the user' s operation target player object 56 satisfies the above described conditions 1 to 3, the user is required to use an operating member other than the direction buttons 34 in order to move the operation target player object 56. This arrangement also enables preferable production of an image showing a picture in which a defender player object 56 of the operation target team loses sight of a forward player object 56 of the opponent team having moved so as to disappear from the view of the defender player object 56 and thus cannot respond well to (defend against or the like) the forward player object 56.

Also, for example, only in the case where the user' s operation target player object 56 satisfies the above described conditions 1 to 3 and the ball object 58 is passed to a "forward player object 56 of the opponent team" located within the dead angle area 64 of the user's operation target player object 56, a state in which the user' s operation target player object 56 takes an action according to the action control table A may be switched to a state in which the user's operation target player object 56 takes an action according to the action control table B.

In other words, in the case where there a player object 56 exists, among the player objects 56 of the operation target team, which satisfies the conditions 1, 2, and 3a described below at a time when any forward player object 56 of the opponent team shifts from a state of not holding the ball object 58 to a state of holding the ball object 58 (e.g., a time when any forward player object 56 of the opponent team receives the ball object 58 passed from another player object 56), the above described switching may be effected.
[Condition 1] The position kind is a defender.
[Condition 2] The position is within the goal front area 59 of the operation target team.
[Condition 3a] A forward player object 56 of the opponent team is located within the dead angle area 64 and holds the ball object 58.

Note that the determination as to whether or not any of the forward player objects 56 of the opponent team shifts from a state of not holding the ball object 58 to a state of holding the ball object 58 is made based on a determination (monitoring), e.g., as to whether or not the forward player object 56 shifts from a state in which the distance between the player object 56 and the ball object 58 is larger than a ball holding determination reference distance to a state in which the distance is equal to or smaller than the ball holding determination reference distance. In other words, the determination is made based on a determination (monitoring) as to whether or not the ball object 58 has moved into a ball holding determination reference area of any of the forward player objects 56 of the opponent team. Note that the ball holding determination reference area is an area with the distance from the position of the player object 56 equal to or shorter than the ball holding determination reference distance.

As described above, it may be arranged such that, for example, the user's operation target player object 56a-2 takes an action in the state shown in Fig. 8 according to the action control table A, and then takes an action according to the action control table B once the state shown in Fig. 10 is established.

Also, for example, in the case where the user's operation target player object 56 satisfies the above described conditions 1 to 3, switching to another player object 56 as an operation target may be restricted during a period before the state in which the user's operation target player object 56 takes an action according to the action control table A is restored after the state in which the user's operation target player object 56 takes an action according to the action control table B is established, or before a predetermined period of time elapses after the state in which the user's operation target player object 56 takes an action according to the action control table B is established. This arrangement forces the user to carry out an operation in accordance with the action control table B for, e.g., a predetermined period of time.

Further, for example, a parameter indicating how well a player object 56 disappears from the view of another player (hereinafter referred to as a first ability parameter) and a parameter indicating the height of the ability to sense such an action of another player (hereinafter referred to as a second ability parameter) may be set with respect to the respective player objects 56.

In this case, a condition 4 stating that "the second ability parameter value of the user's operation target player object 56 is smaller than the first ability parameter value of a forward player object 56 of the opponent team located within the dead angle area 64 of the user's operation target player object 56" may be included in addition to the above described conditions 1 to 3.

The size of the dead angle area 64 of the user's operation target player object 56 may be changed, based on at least one of the second ability parameter of the player object 56 and the first ability parameter of the forward player object 56 of the opponent team. For example, the reference angle (θ) and/or reference distance (R) value may be changed, based on the second ability parameter value of the user's operation target player object 56. More specifically, as the second ability parameter of the user's operation target player object 56 becomes larger, the reference angle (θ) and/or reference distance (R) value may become smaller. Further, for example, the reference angle (θ) and/or reference distance (R) value may be changed based on the difference between the second ability parameter value of the user's operation target player object 56 and the first ability parameter value of the forward player object 56 of the opponent team. More specifically, as the value obtained by subtracting the first ability parameter value of the forward player object 56 of the opponent team from the second ability parameter value of the user' s operation target player object 56 becomes larger, the reference angle (θ) and/or reference distance (R) value may become smaller.

Also, the second ability parameter value of the user's operation target player object 56 may be corrected based on a result of determination as to whether or not another player object 56 of the operation target team is located within a range within a predetermined distance from the position of the user's operation target player object 56. In this case, determination as to whether or not the above described condition 4 is satisfied and determination about the size of the dead angle area 64 may be made based on the corrected second ability parameter value.

Further, for example, the above described condition 3 may alternatively be read, as a condition 3b, as a "forward player object 56 of the opponent team is located within the dead angle area 64, and moves at a speed equal to or faster than a predetermined speed". Also, for example, the dead angle area 64 of the player object 56 may be a fan-like area in which the "direction opposite from the direction from the player object 56 to the ball object 58" and a direction extending from the position of the player object 56 form an angle equal to or smaller than a predetermined reference angle (θ), and the distance (a distance on the XZ plane system) from the player object 56 is within a predetermined reference distance (R).

For example, in the process shown in Fig. 14, in the case where the user's operation target player object 56 satisfies the above described conditions 1 to 3, a state in which the user's operation target player object 56 acts according to the action control table B is established, and in the case where the user' s operation target player object 56 no longer satisfies the above described conditions 1 to 3, a state in which the user's operation target player object 56 acts according to the action control table A is restored. Alternatively, the state in which the user' s operation target player object 56 acts according to the action control table B may continue for a predetermined period of time once the user' s operation target player object 56 satisfies the above described conditions 1 to 3. In this case, the period of time during which the user's operation target player object 56 remains acting according to the action control table B may be changed based on at least one of the second ability parameter of the user's operation target player object 56 and the first ability parameter of the forward player object 56 of the opponent team, similar to the size of the dead angle area 64 or the like.

Note that, for example, the opponent team may be operated by another user, and the operation target team and the opponent team may be operated by a plurality of users.

Further, for example, a game carried out in the game machine 10 is not limited to a soccer game, and may be, e.g., any sport game (a game, such as basket ball, ice hockey, or the like, carried out using a moving body such as a ball, a puck, or the like) other than a soccer game. Also, a game carried out in the game machine 10 may be any game (an action game or the like) other than a sport game. The present invention can be applied to a game machine 10 for producing a game which requires preferable production of a picture of a first game character who loses sight of a second game character having moved so as to disappear from the view of the first game character, and thus cannot respond well to (defend or the like) the second game character.

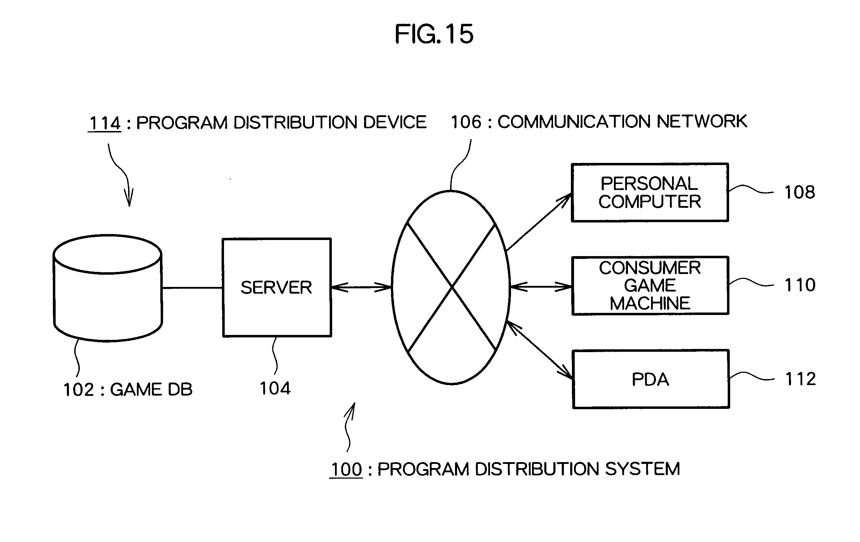

Still further, although it is described in the above that a program is supplied from a DVD-ROM 25, or an information storage medium, to the consumer game machine 11, the program may alternatively be distributed via a communication network to a home or the like. Fig. 15 is a diagram showing an overall structure of a program distribution system using a communication network. Referring to Fig. 15, a program distribution method according to the present invention will be described. As shown, the program distribution system 100 comprises a game database 102, a server 104, a communication network 106, a personal computer 108, a consumer game machine 110, and a PDA (personal digital assistant) 112. The game database 102 and the server 104 together constitute a program distribution device 114. The communication network 106 comprises the Internet, a cable television network, or the like, for example. In this system, a program having content identical to that stored in the DVD-ROM 25 is stored in the game database (an information storage medium) 102. A person wishing to obtain a game sends a game distribution request via the personal computer 108, the consumer game machine 110, the PDA 112, or the like, which is then transmitted via the communication network 106 to the server 104. Then, the server 104, in response to the game distribution request, reads the program from the game database 102, and sends the read program to the entity having requested the game distribution, such as the personal computer 108, the consumer game machine 110, the PDA 112, or the like. It should be noted that although it is arranged here that a game is distributed in response to a game distribution request, the server 104 may sends a game unidirectionally. Further, simultaneous distribution of all program components necessary to realize a game (collective distribution) is unnecessary, and distribution of only a component necessary in each aspect of the game (divided distribution) is applicable instead. The above described game distribution via the communication network 106 makes it possible for a person wishing to obtain the program to readily obtain the desired program.

## Claims

1. A game machine for showing a picture of a game space where a first game character which takes at least one of a plurality of actions according to an operation signal input from operation means, and a second game character, are placed, comprising:
action control means for causing the first game character to take an action according to the operation signal input from the operation means, based on action control information in which an operation signal condition concerning the operation signal input from the operation means corresponds to each of the plurality of actions;
determination means for determining whether or not a position of the second game character is included within a determination target area in the game space, the area being based on a position and orientation of the first game character; and
action control information changing means for changing the action control information, based on a result of determination by the determination means, in which the operation signal condition corresponding to at least one of the plurality of actions is changed.

2. The game machine according to claim 1, wherein
the action control information changing means exchanges an operation signal condition corresponding to a first action among the plurality of actions, and an operation signal condition corresponding to a second action different from the first action among the plurality of actions.

3. The game machine according to claim 2, wherein
the first action is a moving action of moving in a first direction of the game space, and
the second action is a moving action of moving in a second direction which is a direction opposite from the first direction in the game space.

4. The game machine according to any one of claims 1 to 3, wherein
the action control information changing means changes, for at least one of the plurality of actions, an operation signal condition corresponding to the action from a condition concerning a first operating member included in the operation means to a condition concerning a second operating member different from the first operating member included in the operation means.

5. A control method for controlling a game machine for showing a picture of a game space where a first game character which takes at least one of a plurality of actions according to an operation signal input from operation means, and a second game character, are placed, comprising:
an action control step of causing the first game character to take an action according to the operation signal input from the operation means, based on action control information in which an operation signal condition concerning the operation signal input from the operation means corresponds to each of the plurality of actions;
a determination step of determining whether or not a position of the second game character is included within a determination target area in the game space, the area being based on a position and orientation of the first game character; and
an action control information changing step of changing the action control information, based on a result of determination by the determination step, in which the operation signal condition corresponding to at least one of the plurality of actions is changed.

6. A computer readable information storage medium storing a program for causing a computer to function as a game machine for showing a picture of a game space where a first game character which takes at least one of a plurality of actions according to an operation signal input from operation means, and a second game character, are placed, comprising:
action control means for causing the first game character to take an action according to the operation signal input from the operation means, based on action control information in which an operation signal condition concerning the operation signal input from the operation means corresponds to each of the plurality of actions;
determination means for determining whether or not a position of the second game character is included within a determination target area in the game space, the area being based on a position and orientation of the first game character; and
action control information changing means for changing the action control information, based on a result of determination by the determination means, in which the operation signal condition corresponding to at least one of the plurality of actions is changed.
